# EUROPEAN PATENT APPLICATION

(11) **EP 4 726 889 A1**
(43) Date of publication of application: **15.04.2026**
(21) Application number: 23945552.0
(22) Date of filing: 29.08.2023
(51) Int. Cl.: H01M 50/264, H01M 50/249, H01M 50/204

(54) **BATTERY AND ELECTRIC DEVICE**

(30) Priority: 19.07.2023 CN 202321899640 U
(71) Applicant: Contemporary Amperex Technology Co., Limited, Ningde, Fujian 352100 (CN)
(72) Inventor: WU, Kai, Ningde, Fujian 352100 (CN); LI, Xiang, Ningde, Fujian 352100 (CN); CUI, Lu, Ningde, Fujian 352100 (CN); WU, Miangao, Ningde, Fujian 352100 (CN); WU, Guangdang, Ningde, Fujian 352100 (CN); DING, Guangzhou, Ningde, Fujian 352100 (CN)
(74) Representative: Lorenz Seidler Gossel Part. mbB
(86) International application number: PCT/CN2023/115452
(87) International publication number: WO 2025/015668

(57) **Abstract**

A battery (2) includes multiple battery groups (10) and multiple straps (20). The multiple battery groups (10) are arranged along a first direction, each battery group (10) including multiple battery cells (11) stacked along a second direction, the second direction intersecting the first direction. At least a portion of the strap (20) is disposed on a side surface of at least one battery group (10) along the first direction and configured to constrain the multiple battery cells (11) of at least one battery group (10). At least two straps (20) pass between adjacent battery groups (10) and are configured to constrain the adjacent battery groups (10), the at least two straps (20) not overlapping in the first direction and overlapping in a third direction, the third direction being perpendicular to the first direction and the second direction.

## Description

### CROSS-REFERENCE TO RELATED APPLICATIONS

This application claims priority to Chinese Patent Application No. 202321899640.1, filed on July 19, 2023, entitled "BATTERY AND ELECTRIC DEVICE," which is incorporated herein by reference in its entirety.

### TECHNICAL FIELD

This application relates to the field of batteries, and particularly to a battery and an electric device.

### BACKGROUND

With the development of battery technology, batteries are applied in an increasing number of fields and are gradually replacing traditional fossil energy in the field of automotive power. A battery can store chemical energy and controllably convert the chemical energy into electrical energy. In a rechargeable battery, after discharging, active materials can be activated through charging for continued use.

How to increase the energy density of batteries is an important research direction in the industry.

### SUMMARY

This application provides a battery and an electric device, capable of increasing the energy density of the battery.

According to a first aspect, this application provides a battery including multiple battery groups and multiple straps. The multiple battery groups are arranged along a first direction, where each battery group includes multiple battery cells stacked along a second direction, the second direction intersecting the first direction. At least a portion of the strap is disposed on a side surface of at least one battery group along the first direction and configured to constrain the multiple battery cells of at least one battery group. At least two straps pass between adjacent battery groups and are configured to constrain the adjacent battery groups, the at least two straps not overlapping in the first direction but overlapping in a third direction, and the third direction being perpendicular to the first direction and the second direction.

In the embodiments of this application, the straps have a small volume and light weight. Constraining the battery groups with the straps can effectively save space and weight, thereby increasing the energy density of the battery. The straps passing between the two adjacent battery groups do not overlap in the first direction, allowing the straps passing between the two adjacent battery groups to avoid each other in the first direction when the two battery groups are arranged along the first direction. Meanwhile, the straps passing between the two adjacent battery groups overlap in the third direction, enabling the straps passing between the two adjacent battery groups to share a portion of space in the first direction, thereby improving the space utilization rate of the battery in the first direction and increasing the energy density of the battery.

In some embodiments, the strap is disposed around an outer periphery of at least one battery group. The strap can constrain the multiple battery cells of the battery group from the outer periphery, reducing the risk of the multiple battery cells of the battery group scattering and improving the reliability of the battery.

In some embodiments, the strap is disposed around an outer periphery of one battery group and configured to constrain the multiple battery cells of the corresponding one battery group, and each battery group has at least one strap disposed around its outer periphery.

During charging, a battery cell may swell, and a strap needs to constrain multiple battery cells and withstand a swelling force of the multiple battery cells. In the embodiments of this application, one strap is configured to constrain only one battery group, reducing the force on the strap during the battery charging process, lowering the risk of strap breakage, and improving the reliability of the battery.

In some embodiments, at least one strap is disposed around outer peripheries of two or more battery groups. Provided that the strength of the strap meets requirements, one strap can simultaneously constrain two or more battery groups, thereby saving materials, reducing the space occupied by and the weight of the strap, and increasing the energy density of the battery.

In some embodiments, the battery further includes a first end plate and a second end plate disposed that are opposite to each other along the second direction, where at least one battery group is disposed between the first end plate and the second end plate. The strap is connected to the first end plate and the second end plate, enabling the first end plate and the second end plate to clamp the at least one battery group from two sides.

Clamping the battery group with the strap through the first end plate and the second end plate can improve the uniformity of force distribution on the battery cells, reducing local deformation of the battery cells.

In some embodiments, the strap includes a first end portion and a second end portion that are opposite to each other along the second direction, the first end portion and the second end portion being respectively connected to the first end plate and the second end plate. The embodiments of this application can save the space occupied by and the weight of the strap, thereby increasing the energy density of the battery.

In some embodiments, the battery includes multiple battery modules disposed along the first direction. Each battery module includes one first end plate, one second end plate, one battery group, and at least one strap, the battery group is disposed between the first end plate and the second end plate, and the strap surrounds an entirety formed by the first end plate, the second end plate, and the battery group. Straps of two adjacent battery modules do not overlap in the first direction but overlap in the third direction.

Providing each battery group with a corresponding first end plate, second end plate, and strap can enhance the overall structural strength, improve the stability of the multiple battery cells of each battery group, reduce the force on the strap during the battery cell charging process, lower the risk of strap breakage, and improve the reliability of the battery.

In some embodiments, an outer surface of the first end plate includes a positioning surface perpendicular to the third direction, and the strap abuts against the positioning surface in the third direction.

The positioning surface can provide positioning for the strap, allowing the straps of adjacent battery modules to be staggered in the third direction, saving the space occupied by the straps in the first direction. Providing the positioning surface can simplify the assembly process of the battery.

In some embodiments, the strap includes a first edge and a second edge opposite along the third direction, and the first edge abuts against the positioning surface. A side of the first end plate facing away from the battery group is provided with a stop protrusion; and in the third direction, the stop protrusion is disposed on a side of the second edge facing away from the first edge.

The positioning surface and the stop protrusion can limit the strap from two sides, reducing the risk of the strap dislodging due to battery vibration or other reasons, and improving the reliability of the battery.

In some embodiments, among two first end plates adjacent along the first direction, at least one positioning surface of one first end plate and at least one positioning surface of the other first end plate face towards a same direction, and a minimum distance between the positioning surfaces facing towards the same direction in the third direction is D1. A maximum size of the strap along the third direction is D2, where D1 ≥ D2.

The embodiments of this application ensure D1 ≥ D2 to reserve sufficient space between the positioning surfaces of the two first end plates to accommodate the straps, reducing the risk of interference or compression between the straps on the two first end plates, improving the positioning accuracy of the straps, and enhancing the reliability of the battery.

In some embodiments, the battery includes at least one battery module. The battery module includes one first end plate, one second end plate, at least two battery groups, and at least two straps, the at least two battery groups are disposed between the first end plate and the second end plate, and each strap passes around an outer side of the first end plate and an outer side of the second end plate and clamps the multiple battery cells of one battery group through the first end plate and the second end plate.

The multiple straps clamp multiple battery groups through one first end plate and one second end plate, thereby increasing the capacity of a single battery module and simplifying the structure of the battery. Each strap is configured to constrain only one battery group, reducing the force on the strap during the battery cell charging process, lowering the risk of strap breakage, and improving the reliability of the battery.

In some embodiments, the first end plate includes multiple limiting portions spaced apart along the first direction, a receiving groove is formed between adjacent limiting portions, and the receiving groove is recessed from an end surface of the first end plate along the third direction. The limiting portions are equal in number to the battery groups and correspond one-to-one thereto. The strap passes through the receiving groove and surrounds the limiting portions and the battery groups corresponding to the limiting portions.

The strap can be inserted into the receiving groove and pass through the side of the limiting portion facing away from the battery group, thereby restricting movement of the limiting portion in a direction away from the battery group, enabling the strap to constrain the multiple battery cells of the battery group through the first end plate. Providing the receiving groove can also position the strap, simplifying the installation process of the strap.

In some embodiments, two straps pass through a same receiving groove, and the two straps respectively surround two battery groups. Within the same receiving groove, the two straps are arranged along the third direction.

One receiving groove can simultaneously position two straps, simplifying the structure of the first end plate. Arranging the two straps along the third direction in the receiving groove can allow the two straps to share a portion of space in the first direction, thereby improving the space utilization rate of the battery in the first direction and increasing the energy density of the battery.

In some embodiments, a sidewall of the receiving groove is provided with a step surface; and within the same receiving groove, one strap abuts against a bottom surface of the receiving groove, and the other strap abuts against the step surface.

The step surface and the bottom surface can respectively position the two straps, reducing the risk of the two straps overlapping in the first direction.

In some embodiments, the strap includes a first edge and a second edge opposite along the third direction, the first edge being closer to a bottom surface of the receiving groove in the third direction. A side of each limiting portion facing away from the battery group is provided with a stop protrusion; and in the third direction, the stop protrusion is disposed on a side of the second edge facing away from the first edge.

The stop protrusion can limit the strap, reducing the risk of the strap dislodging from the receiving groove due to battery vibration or other reasons, and improving the reliability of the battery.

According to a second aspect, this application provides an electric device including the battery provided in any embodiment of the first aspect, where the battery is configured to provide electrical energy.

### BRIEF DESCRIPTION OF DRAWINGS

The following describes features, advantages, and technical effects of example embodiments of this application with reference to the accompanying drawings.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery according to some embodiments of this application;
FIG. 4 is a schematic structural diagram of a battery module shown in FIG. 3;
FIG. 5 is a schematic view of the battery shown in FIG. 3 observed from a second direction;
FIG. 6 is an enlarged schematic view of a circled zone shown in FIG. 3;
FIG. 7 is an enlarged schematic view of a circled zone shown in FIG. 5;
FIG. 8 is a schematic structural diagram of a battery module of a battery according to some embodiments of this application;
FIG. 9 is a schematic exploded view of the battery module shown in FIG. 8;
FIG. 10 is a schematic view of the battery module shown in FIG. 8 observed from a second direction;
FIG. 11 is a schematic structural diagram of a first end plate of a battery according to some embodiments of this application;
FIG. 12 is an enlarged schematic view of a circled zone shown in FIG. 8;
FIG. 13 is an enlarged schematic view of a circled zone shown in FIG. 10;
FIG. 14 is an enlarged schematic view of a circled zone shown in FIG. 11;
FIG. 15 is a schematic structural diagram of a battery according to some other embodiments of this application; and
FIG. 16 is a schematic structural diagram of a battery according to some other embodiments of this application.

In the drawings, the drawings are not necessarily drawn to actual scale.

Description of reference signs:
1. vehicle; 2. battery; 3. controller; 4. motor; 5. box; 5a. first box portion; 5b. second box portion; 6. battery module;
10. battery group; 11. battery cell; 10a. side surface;
20. strap; 21. first edge; 22. second edge; 20a. first end portion; 20b. second end portion;
30. first end plate; 31. positioning surface; 32. first arc surface; 33. stop protrusion; 34. limiting portion; 35. receiving groove; 351. step surface; 352. bottom surface; 353. second arc surface; 354. third arc surface;
40. second end plate;
Y. first direction; X. second direction; and Z. third direction.

### DESCRIPTION OF EMBODIMENTS

To make the objectives, technical solutions, and advantages of the embodiments of this application clearer, the technical solutions in the embodiments of this application are described clearly below with reference to the accompanying drawings in the embodiments of this application. Apparently, the described embodiments are some but not all embodiments of this application. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those skilled in the technical field of this application. Terms used in the specification of this application are solely for the purpose of describing specific embodiments and are not intended to limit this application. Terms "including" and "having" and any variations thereof in the specification, claims, and accompanying drawings of this application are intended to cover non-exclusive inclusion. In the specification, claims, or accompanying drawings of this application, terms "first," "second," and the like are used to distinguish between different objects rather than to describe a particular order or primary-secondary relationship.

Reference to "embodiment" in this application means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, unless otherwise specified and explicitly defined, terms "mount," "connect," "join," and "attach" should be understood in their general senses. For example, they may refer to a fixed connection, a detachable connection, or an integral connection. A direct connection, an indirect connection via an intermediate medium, or an internal communication between two elements. Those of ordinary skill in the art can understand the specific meanings of the above terms in this application based on specific circumstances.

The term "and/or" in this application is merely an association relationship describing associated objects, indicating that three relationships may exist. For example, A and/or B may indicate: A exists alone, A and B exist simultaneously, and B exists alone. In addition, the character "/" in this application generally indicates an "or" relationship between the contextually associated objects.

In the embodiments of this application, the same reference signs denote the same components. For brevity, detailed descriptions of the same components are not repeated in different embodiments. It should be understood that the thickness, length, width, and other dimensions of various components in the embodiments of this application shown in the drawings, as well as the overall thickness, length, width, and other dimensions of an integrated device, are merely exemplary and should not constitute any limitation to this application.

The term "multiple" in this application refers to two or more (including two).

The term "parallel" in some embodiments of this application includes not only the absolutely parallel case but also the approximately parallel case in the conventional understanding of engineering. Likewise, the term "perpendicular" includes not only the absolutely perpendicular case but also the approximately perpendicular case in the conventional understanding of engineering. For example, two directions may be considered perpendicular if an included angle between the two directions is 85°-90°, and two directions may be considered parallel if the included angle between the two directions is 0°-5°.

In the embodiments of this application, the battery cell may be a secondary battery, and the secondary battery refers to a battery cell that can be recharged to activate active materials for continuous use after the battery cell is discharged.

The battery cell may be a lithium-ion battery cell, sodium-ion battery cell, sodium-lithium-ion battery cell, lithium-metal battery cell, sodium-metal battery cell, lithium-sulfur battery cell, magnesium-ion battery cell, nickel-hydrogen battery cell, nickel-cadmium battery cell, lead-acid battery cell, or the like, which is not limited in the embodiments of this application.

The battery cell generally includes an electrode assembly and a housing. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent a short circuit between the positive electrode and the negative electrode and to allow the active ions to pass through.

The housing is configured to encapsulate the electrode assembly, the electrolyte, and other components. The housing may be a steel housing, aluminum housing, plastic housing (for example, polypropylene), composite metal housing (for example, copper-aluminum composite housing), aluminum-plastic film, or the like.

As an example, the battery cell may be a cylindrical battery cell, prismatic battery cell, pouch battery cell, or battery cell of other shapes. The prismatic battery cell includes a square-shell battery cell, blade-shaped battery cell, polygonal prismatic battery, such as a hexagonal prismatic battery, and the like, which is not particularly limited in this application.

The battery mentioned in the embodiments of this application refers to a single physical module including one or more battery cells to provide higher voltage and capacity.

In some embodiments, the battery may be a battery pack, the battery pack includes a box and battery cells, and the battery cells or battery modules are accommodated in the box.

In some embodiments, the box may be used as part of the chassis structure of a vehicle. For example, a part of the box may become at least a part of the chassis of a vehicle, or a part of the box may become at least parts of a cross beam and longitudinal beam of a vehicle.

In some embodiments, the battery may be an energy storage apparatus. The energy storage apparatus includes an energy storage container, an energy storage electric cabinet, and the like.

In related arts, multiple battery cells in a battery are generally fixed by a frame structure composed of end plates and side plates. The end plates and side plates are heavy and occupy a large space, reducing the energy density of the battery cells.

In some embodiments, the battery fixes the battery cells by providing straps. For example, a strap surrounds the outer periphery of a row of battery cells to secure the row of battery cells. Compared to the frame structure composed of end plates and side plates, the strap has a small volume and light weight, effectively saving space and weight, and increasing the energy density of the battery.

However, due to the demand for battery capacity, multiple rows of battery cells are typically arranged inside the battery; when arranging multiple rows of battery cells, the space occupied by multiple straps in the arrangement direction accumulates, resulting in a large space occupied by the straps, which affects the energy density of the battery.

In view of this, embodiments of this application provide a technical solution that arranges the straps in a staggered manner to allow the straps to share a portion of space in the arrangement direction, improving space utilization and increasing the energy density of the battery.

In the following embodiments, for ease of description, the electric device being a vehicle is used as an example.

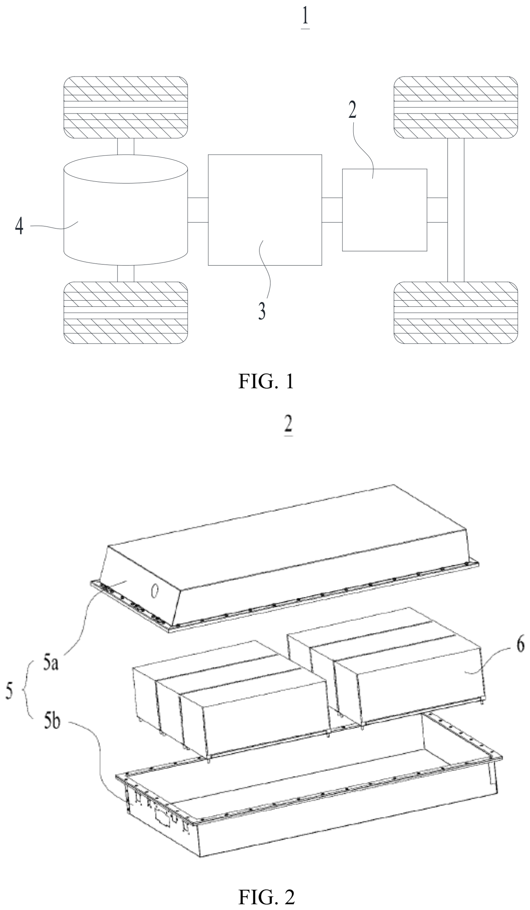

FIG. 1 is a schematic structural diagram of a vehicle according to some embodiments of this application.

As shown in FIG. 1, a battery 2 is disposed inside a vehicle 1, and the battery 2 may be disposed at the bottom, head, or tail of the vehicle 1. The battery 2 may be used for powering the vehicle 1. For example, the battery 2 may serve as an operational power source for the vehicle 1.

The vehicle 1 may further include a controller 3 and a motor 4, the controller 3 being configured to control the battery 2 to supply power to the motor 4, for example, for operational power demands during startup, navigation, and driving of the vehicle 1.

In some embodiments of this application, the battery 2 can be used not only as the operational power source for the vehicle 1 but also as a driving power source for the vehicle 1, replacing all or a part of fossil fuel or natural gas to provide driving power for the vehicle 1.

FIG. 2 is a schematic exploded view of a battery according to some embodiments of this application.

In some embodiments, the battery 2 includes multiple battery cells. The battery cell may be the smallest unit constituting the battery 2.

In some embodiments, the battery 2 includes a box 5, and multiple battery cells are accommodated in the box 5.

The box 5 is configured to accommodate the battery cell, and the box 5 may have various structures. In some embodiments, the box 5 may include a first box portion 5a and a second box portion 5b, the first box portion 5a and the second box portion 5b covering each other, and the first box portion 5a and the second box portion 5b together defining an accommodation space for accommodating the battery cells. The second box portion 5b may be a hollow structure with one end open, and the first box portion 5a is a plate-like structure. The first box portion 5a covers an open side of the second box portion 5b to form the box 5 with an accommodation space. Both the first box portion 5a and the second box portion 5b may alternatively be hollow structures with one side open. The open side of the first box portion 5a covers the open side of the second box portion 5b to form the box 5 with an accommodation space. Certainly, the first box portion 5a and the second box portion 5b may have various shapes, such as a cylinder, cuboid, or the like.

To improve airtightness after connection of the first box portion 5a and the second box portion 5b, a sealing member, such as sealing gum or a sealing ring, may be disposed between the first box portion 5a and the second box portion 5b.

Assuming that the first box portion 5a fits on the top of the second box portion 5b, the first box portion 5a may also be referred to as an upper box cover, and the second box portion 5b may also be referred to as a lower box part.

Multiple battery cells may be connected in series, in parallel, or in series-parallel. Series-parallel refers to a combination of series and parallel connections among the multiple battery cells.

In some embodiments, multiple battery cells are first connected in series, in parallel, or in series-parallel to form a battery module 6, and multiple battery modules 6 are then connected in series, in parallel, or in series-parallel to form an entirety, which is accommodated in the box 5.

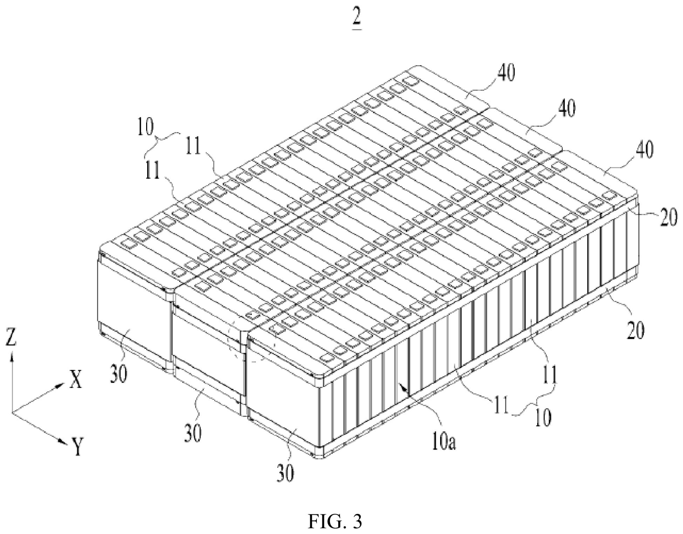

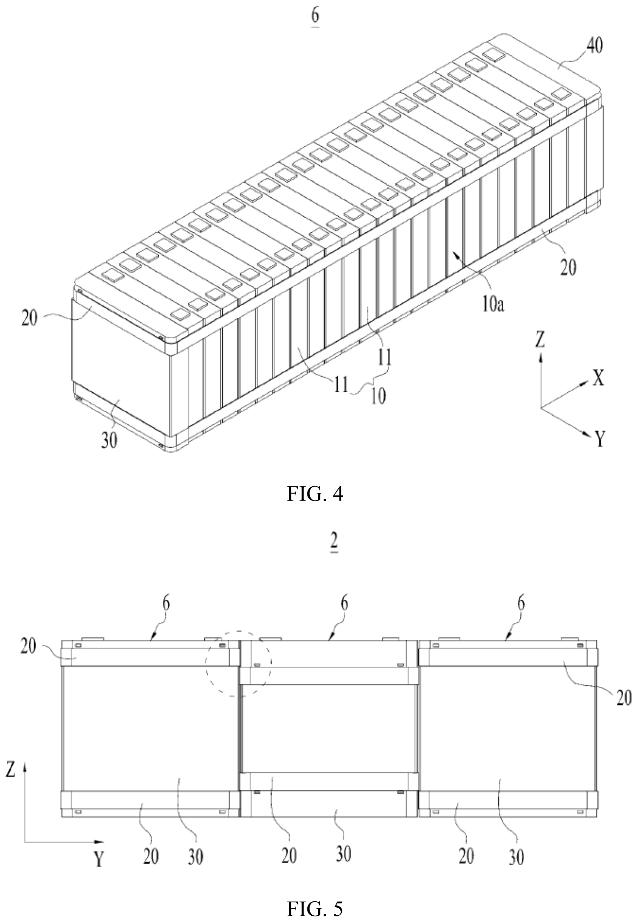

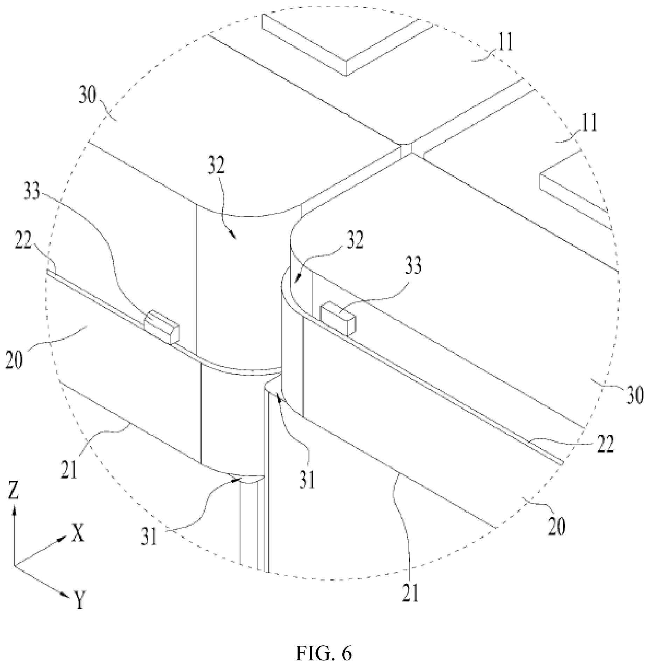

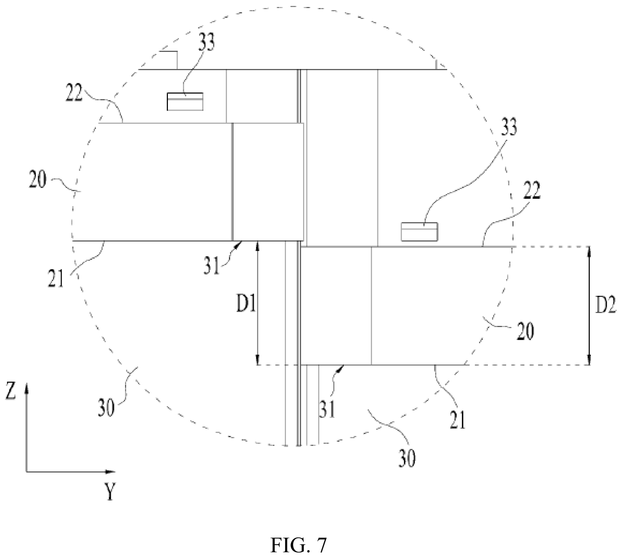

FIG. 3 is a schematic structural diagram of a battery according to some embodiments of this application; FIG. 4 is a schematic structural diagram of a battery module shown in FIG. 3; FIG. 5 is a schematic view of the battery shown in FIG. 3 observed from a second direction; FIG. 6 is an enlarged schematic view of a circled zone shown in FIG. 3; and FIG. 7 is an enlarged schematic view of a circled zone shown in FIG. 5.

Referring to FIG. 3 to FIG. 7, a battery 2 according to embodiments of this application includes multiple battery groups 10 and multiple straps 20. The multiple battery groups 10 are arranged along a first direction Y, each battery group 10 including multiple battery cells 11 stacked along a second direction X, and the second direction X intersecting the first direction Y. At least a portion of the strap 20 is disposed on a side surface 10a of at least one battery group 10 along the first direction Y and configured to constrain the multiple battery cells 11 of the at least one battery group 10. At least two straps 20 pass between adjacent battery groups 10 and are configured to constrain the adjacent battery groups 10. The at least two straps 20 passing between adjacent battery groups 10 do not overlap in the first direction Y but overlap in a third direction Z, the third direction Z being perpendicular to the first direction Y and the second direction X.

The multiple battery cells 11 of the battery group 10 are arranged in a row along the second direction X. The multiple battery cells 11 of the battery group 10 may be connected in series, in parallel, or in series-parallel.

The battery cell 11 may be a cylindrical battery cell, prismatic battery cell, pouch battery cell, or battery cell of other shapes. The prismatic battery cell includes a square-shell battery cell, blade-shaped battery cell, polygonal prismatic battery, such as a hexagonal prismatic battery, or the like.

The battery cell 11 may be a lithium-ion battery cell, sodium-ion battery cell, sodium-lithium-ion battery cell, lithium-metal battery cell, sodium-metal battery cell, lithium-sulfur battery cell, magnesium-ion battery cell, nickel-hydrogen battery cell, nickel-cadmium battery cell, lead-acid battery cell, or the like.

The number of battery cells 11 in two adjacent battery groups 10 may be the same or different.

The types of battery cells 11 in two adjacent battery groups 10 may be the same. For example, the battery cells 11 of each battery group 10 are all lithium-ion battery cells. The types of battery cells 11 in two adjacent battery groups 10 may also be different. For example, the battery cells 11 of one battery group 10 are lithium-ion battery cells, and the battery cells 11 of another battery group 10 are sodium-ion battery cells.

An angle is formed between the second direction X and the first direction Y. For example, the first direction Y is perpendicular to the second direction X.

The strap 20 may be an integrally formed structure or may be formed by splicing multiple separate structures.

The material of the strap 20 may be metal, plastic, or other materials. As an example, the strap 20 may be made of a metal material with good tensile and deformation resistance, such as steel.

Multiple straps 20 may be made of the same material or different materials.

The battery group 10 has two side surfaces 10a opposite along the first direction Y. For example, the battery cell 11 includes a first surface and a second surface oppositely disposed along the first direction Y. One side surface 10a includes the first surfaces of the multiple battery cells 11 of the battery group 10, and the other side surface 10a includes the second surfaces of the multiple battery cells 11 of the battery group 10. Optionally, both the first surface and the second surface are perpendicular to the first direction Y.

The strap 20 may directly constrain the multiple battery cells 11 of the battery group 10. For example, the strap 20 may be an annular structure surrounding an outer side of the battery group 10 to constrain the multiple battery cells 11 of the battery group 10. The strap 20 may alternatively indirectly constrain the multiple battery cells 11 of the battery group 10 through other components (such as the end plates described later).

At least a portion of the strap 20 is disposed on the side surface 10a and constrains the battery group 10 in the first direction Y. The strap 20 may be in direct contact with the side surface 10a or may be spaced a certain distance from the side surface 10a.

One strap 20 may constrain the multiple battery cells 11 of only one battery group 10 or may simultaneously constrain the multiple battery cells 11 of two or more battery groups 10.

In some examples, the strap 20 may be an annular structure. For example, the strap 20 may be an integrally formed closed structure. The strap 20 has no free ends in the circumferential direction. Alternatively, the strap 20 may be a strip-shaped structure before being tied to the battery group 10. After the strap 20 is tied to the outer periphery of the battery group 10, the two free ends of the strap 20 are connected to form an annular structure.

The strap 20 can constrain the multiple battery cells 11 of the battery group 10 from the outer periphery, reducing the risk of the multiple battery cells 11 of the battery group 10 scattering.

One strap 20 may surround one battery group 10 or may simultaneously surround multiple battery groups 10. In some examples, each strap 20 surrounds the outer periphery of one battery group 10 and is configured to constrain the multiple battery cells 11 of the corresponding one battery group 10. In some other examples, some straps 20 surround the outer periphery of one battery group 10 and are configured to constrain the multiple battery cells 11 of the corresponding one battery group 10, while some straps 20 surround the outer peripheries of at least two battery groups 10 and are configured to constrain the multiple battery cells 11 of the corresponding at least two battery groups 10. In some other examples, each strap 20 surrounds the outer peripheries of at least two battery groups 10 and is configured to constrain the multiple battery cells 11 of the corresponding at least two battery groups 10.

Each battery group 10 is surrounded and constrained by the strap 20. Each battery group 10 may be surrounded and constrained by one strap 20 or by two or more straps 20.

The strap 20 passes around two sides of the corresponding battery group 10 along the first direction Y and two sides of the corresponding battery group 10 along the second direction X.

In some other examples, the strap 20 may alternatively be a band-shaped structure extending along the second direction X, with its two ends connectable to the first end plate and the second end plate described later to constrain the battery group through the first end plate and the second end plate.

Two or more straps 20 are disposed between at least two adjacent battery groups 10. In some cases, only one strap 20 may be disposed between some adjacent battery groups 10.

The at least two straps 20 passing between adjacent battery groups 10 can at least constrain the two adjacent battery groups 10. For example, for the straps 20 passing between adjacent battery groups 10, some straps 20 may constrain one battery group 10, while other straps 20 constrain another battery group 10, or all straps 20 may collectively constrain the two adjacent battery groups 10.

In the embodiments of this application, the strap 20 has a small volume and light weight. Constraining the battery group 10 with the strap 20 can effectively save space and weight, thereby increasing the energy density of the battery 2. The straps 20 passing between two adjacent battery groups 10 do not overlap in the first direction Y, allowing the straps 20 passing between the two adjacent battery groups 10 to avoid each other in the first direction Y when the two battery groups 10 are arranged along the first direction Y. Meanwhile, the straps 20 passing between the two adjacent battery groups 10 overlap in the third direction Z, enabling the straps 20 passing between the two adjacent battery groups 10 to share a portion of space in the first direction Y, thereby improving the space utilization rate of the battery 2 in the first direction Y and increasing the energy density of the battery 2.

In some embodiments, two or more straps 20 are disposed between any two battery groups 10 adjacent in the first direction Y. The two or more straps 20 passing between adjacent battery groups 10 do not overlap in the first direction Y but overlap in the third direction Z.

In some embodiments, the strap 20 is disposed around the outer periphery of at least one battery group 10. The strap 20 can constrain the multiple battery cells 11 of the battery group 10 from the outer periphery, reducing the risk of the multiple battery cells 11 of the battery group 10 scattering and improving the reliability of the battery.

In some embodiments, each strap 20 surrounds the outer periphery of one battery group 10 and is configured to constrain the multiple battery cells 11 of the corresponding one battery group 10, each battery group 10 having at least one strap 20 surrounding its outer periphery.

One strap 20 is configured to constrain the multiple battery cells 11 of only one battery group 10.

The outer periphery of one battery group 10 may be surrounded by one strap 20 or multiple straps 20. In some examples, at least two straps 20 surround the outer periphery of the same battery group 10 and collectively constrain the multiple battery cells 11 of the battery group 10. Optionally, the at least two straps 20 are spaced apart along the third direction Z and surround the outer periphery of the same battery group 10.

During charging, the battery cells 11 may swell, and the strap 20 needs to constrain the multiple battery cells 11 and withstand the swelling force of the multiple battery cells 11. In the embodiments of this application, one strap 20 is configured to constrain only one battery group 10, reducing the force on the strap 20 during the charging process of the battery 2, lowering the risk of strap 20 breakage, and improving the reliability of the battery 2.

In some embodiments, the straps 20 surrounding any two adjacent battery groups 10 do not overlap in the first direction Y but overlap in the third direction Z.

The embodiments of this application can allow multiple straps 20 to share space in the first direction Y, further improving the space utilization rate of the battery 2 in the first direction Y and increasing the energy density of the battery 2.

In some embodiments, the battery 2 further includes a first end plate 30 and a second end plate 40 disposed that are opposite to each other along the second direction X. At least one battery group 10 is disposed between the first end plate 30 and the second end plate 40. The strap 20 is connected to the first end plate 30 and the second end plate 40, enabling the first end plate 30 and the second end plate 40 to clamp at least one battery group 10 from two sides.

The first end plate 30 and the second end plate 40 are configured to clamp and limit the multiple battery cells 11 of the battery group 10.

The first end plate 30 and the second end plate 40 may clamp only one battery group 10 or may simultaneously clamp two or more battery groups 10.

The first end plate 30 may be a plate-like structure or a composite structure with a certain thickness and reinforcing ribs or other structures. The second end plate 40 may be a plate-like structure or a composite structure with a certain thickness and reinforcing ribs or other structures.

The material of the first end plate 30 and the material of the second end plate 40 may be various, such as steel, aluminum, aluminum alloy, or others.

The first end plate 30 and the second end plate 40 may have the same structure or different structures.

The strap 20 is connected to the first end plate 30 and the second end plate 40 and restricts the first end plate 30 and the second end plate 40 from moving away from each other.

As compared with the solution where the strap 20 directly constrains the battery group 10, clamping the battery group 10 with the strap 20 through the first end plate 30 and the second end plate 40 can improve the uniformity of force distribution on the battery cells 11, reducing local deformation of the battery cells 11.

In some embodiments, the battery 2 includes multiple battery modules 6 disposed along the first direction Y. Each battery module 6 includes one first end plate 30, one second end plate 40, one battery group 10, and at least one strap 20. The battery group 10 is disposed between the first end plate 30 and the second end plate 40, and the strap 20 surrounds an entirety formed by the first end plate 30, the second end plate 40, and the battery group 10. The straps 20 of two adjacent battery modules 6 do not overlap in the first direction Y but overlap in the third direction Z.

The battery module 6 may include only one strap 20 or may include multiple straps 20 simultaneously.

In the embodiments of this application, providing each battery group 10 with a corresponding first end plate 30, second end plate 40, and strap 20 can enhance the overall structural strength, improve the stability of the multiple battery cells 11 of each battery group 10, reduce the force on the strap 20 during the charging process of the battery cells 11, lower the risk of strap 20 breakage, and improve the reliability of the battery 2.

In some embodiments, the battery module 6 includes two straps 20, the two straps 20 being spaced apart along the third direction Z. Optionally, the two straps 20 are disposed close to two ends of the first end plate 30 along the third direction Z.

In some embodiments, the straps 20 of any two battery modules 6 adjacent in the first direction Y do not overlap in the first direction Y but overlap in the third direction Z.

In some embodiments, an outer surface of the first end plate 30 includes a positioning surface 31 perpendicular to the third direction Z, the strap 20 abutting against the positioning surface 31 in the third direction Z.

There may be one or more positioning surfaces 31 abutting against the same strap 20 on the first end plate 30.

The positioning surface 31 can provide positioning for the strap 20, allowing the straps 20 of adjacent battery modules 6 to be staggered in the third direction Z, thereby saving the space occupied by the straps 20 in the first direction Y. Providing the positioning surface 31 can simplify the assembly process of the battery 2.

In some embodiments, an end portion of the first end plate 30 along the first direction Y is provided with a first arc surface 32. The first arc surface 32 is located on a side of the positioning surface 31 facing towards the strap 20. The strap 20 fits the first arc surface 32 and is bent into an arc shape.

Providing the first arc surface 32 can achieve a smooth transition of the strap 20 at the bend, thereby reducing stress concentration in the strap 20 and lowering the risk of strap 20 breakage.

In some embodiments, the positioning surface 31 and the first arc surface 32 may be formed by providing a rounded corner at the end portion of the first end plate 30.

In some embodiments, the first end plate 30 is provided with four positioning surfaces 31. Two positioning surfaces 31 are respectively located at two ends of the first end plate 30 along the first direction Y and configured to position one strap 20, and the other two positioning surfaces 31 are respectively located at two ends of the first end plate 30 along the first direction Y and configured to position another strap 20. The orientation of the two positioning surfaces 31 is opposite to the orientation of the other two positioning surfaces 31. For example, the two positioning surfaces 31 face upward, and the other two positioning surfaces 31 face downward.

In some embodiments, the strap 20 includes a first edge 21 and a second edge 22 opposite along the third direction Z, the first edge 21 abutting against the positioning surface 31. A side of the first end plate 30 facing away from the battery group 10 is provided with a stop protrusion 33. In the third direction Z, the stop protrusion 33 is disposed on a side of the second edge 22 facing away from the first edge 21.

One or more stop protrusions 33 may be provided on the first end plate 30.

The positioning surface 31 and the stop protrusion 33 can limit the strap 20 from two sides, reducing the risk of the strap 20 dislodging due to vibration of the battery 2 or other reasons, and improving the reliability of the battery 2.

In some embodiments, the number and position of the stop protrusions 33 may be set according to the number and position of the straps 20.

For example, the battery module 6 includes two straps 20, each strap 20 corresponding to at least one stop protrusion 33.

In some embodiments, there are four stop protrusions 33, the four stop protrusions 33 being respectively disposed close to the four positioning surfaces 31.

Two stop protrusions 33 and two positioning surfaces 31 are configured to limit one strap 20, and the other two stop protrusions 33 and the other two positioning surfaces 31 are configured to limit another strap 20.

In some embodiments, among two first end plates 30 adjacent along the first direction Y, at least one positioning surface 31 of one first end plate 30 and at least one positioning surface 31 of the other first end plate 30 face towards the same direction, and a minimum distance between the positioning surfaces 31 facing towards the same direction in the third direction Z is D1. A maximum size of the strap 20 along the third direction Z is D2, where D1 ≥ D2.

If D 1 < D2, when the two straps 20 respectively abut against the positioning surfaces 31 of the two first end plates 30, the two straps 20 may compress or interfere with each other in the third direction Z, causing one strap 20 to deviate from the positioning surface 31.

The embodiments of this application ensure D1 ≥ D2 to reserve sufficient space between the positioning surfaces 31 of the two first end plates 30 to accommodate the strap 20, reducing the risk of interference or compression between the straps 20 on the two first end plates 30, improving the positioning accuracy of the strap 20, and enhancing the reliability of the battery 2.

In some embodiments, D1 > D2. The embodiments of this application can allow the straps 20 of two battery modules 6 to be spaced apart along the third direction Z, reducing the risk of interference between the straps 20 due to assembly errors.

In some embodiments, among any two adjacent first end plates 30, at least one positioning surface 31 of one first end plate 30 and at least one positioning surface 31 of the other first end plate 30 face towards the same direction, and a minimum distance between the positioning surfaces 31 facing towards the same direction in the third direction Z is D1. A maximum size of the strap 20 along the third direction Z is D2, where D1 ≥ D2.

In some embodiments, the second end plate 40 is also provided with structures such as a positioning surface and a stop protrusion. For distinction, the positioning surface 31 of the first end plate 30 may be referred to as a first positioning surface, and the stop protrusion 33 of the first end plate 30 may be referred to as a first stop protrusion. The positioning surface of the second end plate 40 may be referred to as a second positioning surface, and the stop protrusion of the second end plate may be referred to as a second stop protrusion.

For example, at least one first positioning surface and at least one second positioning surface are coplanar and configured to position a same strap 20. The second stop protrusion is disposed on a side of the second end plate facing away from the battery group and configured to stop the strap.

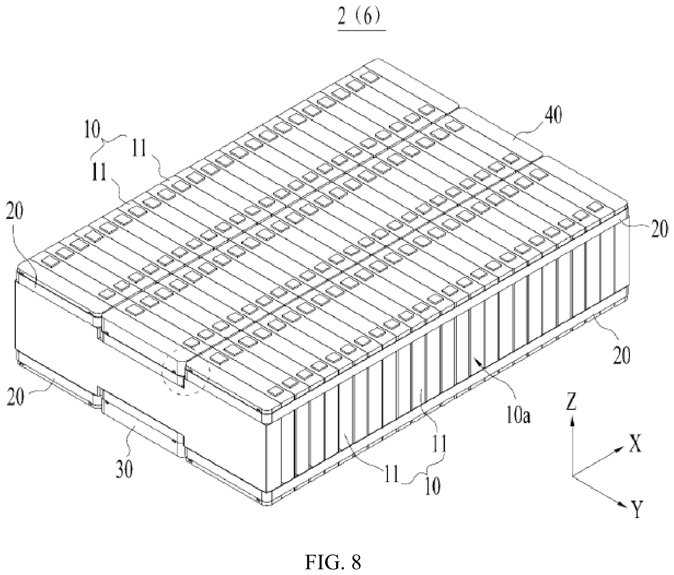

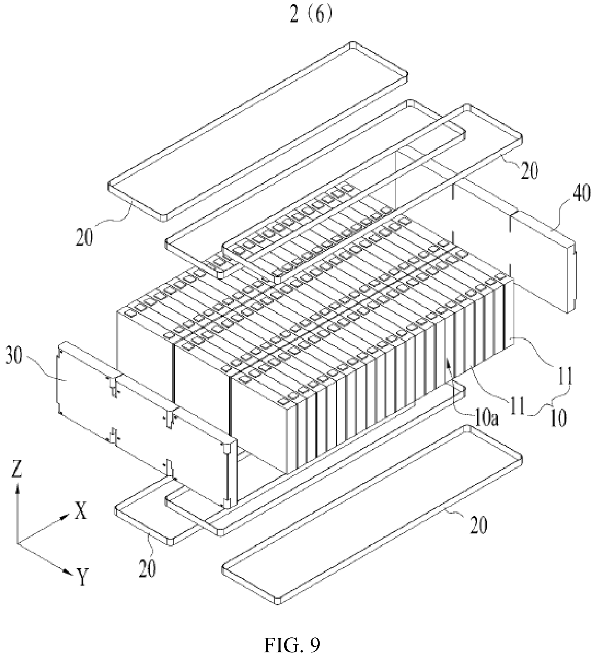

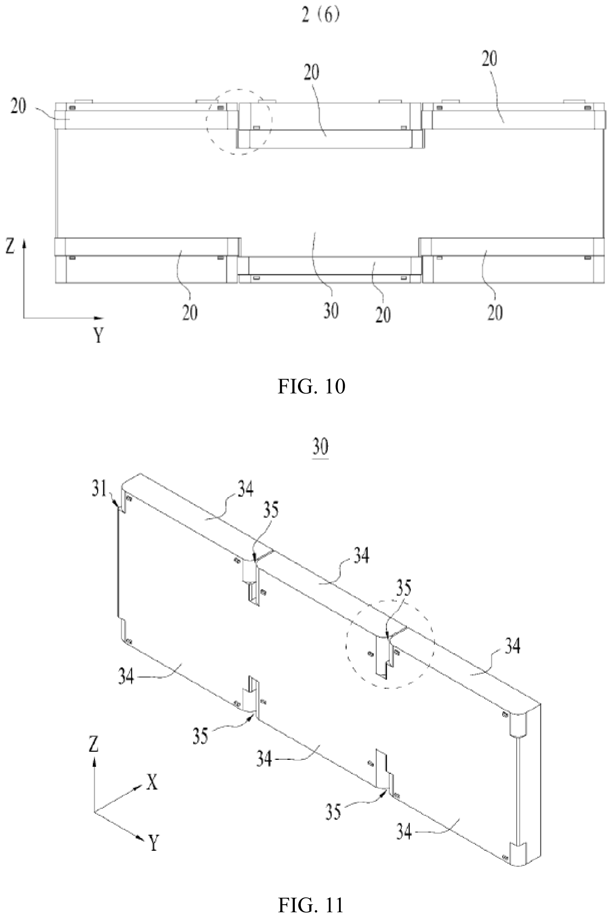

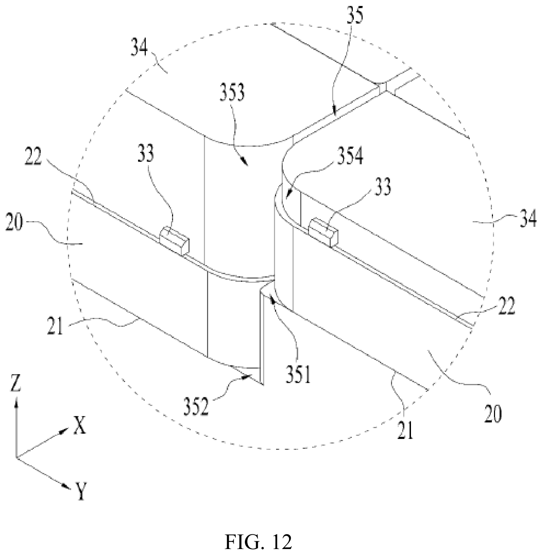

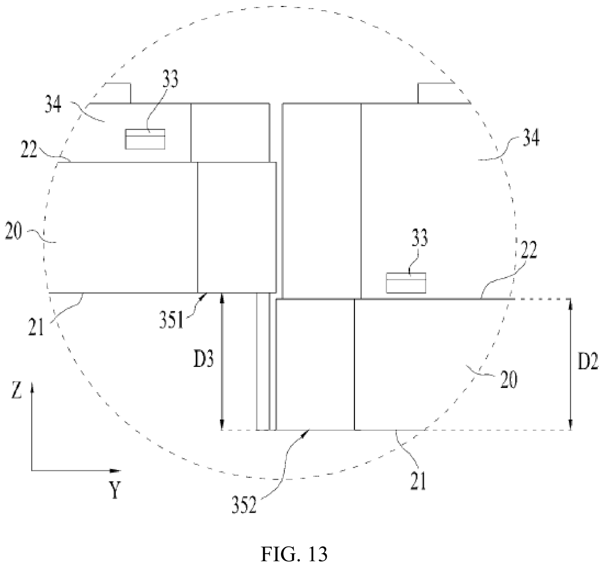

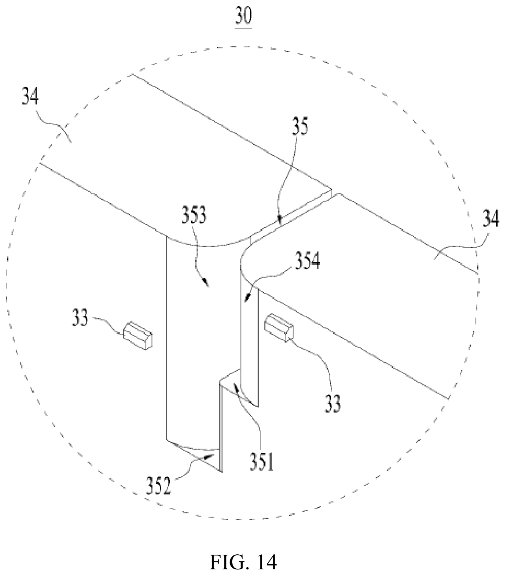

FIG. 8 is a schematic structural diagram of a battery module of a battery according to some embodiments of this application; FIG. 9 is a schematic exploded view of the battery module shown in FIG. 8; FIG. 10 is a schematic view of the battery module shown in FIG. 8 observed from a second direction; FIG. 11 is a schematic structural diagram of a first end plate of a battery according to some embodiments of this application; FIG. 12 is an enlarged schematic view of a circled zone shown in FIG. 8; FIG. 13 is an enlarged schematic view of a circled zone shown in FIG. 10; and FIG. 14 is an enlarged schematic view of a circled zone shown in FIG. 11.

Referring to FIG. 8 to FIG. 14, in some embodiments, the battery 2 includes at least one battery module 6. The battery module 6 includes one first end plate 30, one second end plate 40, at least two battery groups 10, and at least two straps 20. The at least two battery groups 10 are disposed between the first end plate 30 and the second end plate 40. Each strap 20 passes around an outer side of the first end plate 30 and an outer side of the second end plate 40 and clamps the multiple battery cells 11 of one battery group 10 through the first end plate 30 and the second end plate 40.

The battery 2 may include one battery module 6 or two or more battery modules 6.

The battery module 6 may include two battery groups 10 or three or more battery groups 10.

In the battery module 6, each strap 20 surrounds the outer periphery of one battery group 10 and constrains the multiple battery cells 11 of the corresponding one battery group 10 through the first end plate 30 and the second end plate 40.

In the embodiments of this application, multiple straps 20 clamp multiple battery groups 10 through one first end plate 30 and one second end plate 40, thereby increasing the capacity of a single battery module 6 and simplifying the structure of the battery 2. Each strap 20 is configured to constrain only one battery group 10, reducing the force on the strap 20 during the charging process of the battery cells 11, lowering the risk of strap 20 breakage, and improving the reliability of the battery 2.

In some embodiments, the first end plate 30 includes multiple limiting portions 34 spaced apart along the first direction Y, a receiving groove 35 being formed between adjacent limiting portions 34. The receiving groove 35 is recessed from an end surface of the first end plate 30 along the third direction Z. The limiting portions 34 are equal in number to the battery groups 10 and correspond one-to-one thereto. The strap 20 passes through the receiving groove 35 and surrounds the limiting portions 34 and the battery groups 10 corresponding to the limiting portions 34.

In the embodiments of this application, multiple limiting portions 34 may be provided only at one end of the first end plate 30 along the third direction Z, or multiple limiting portions 34 may be provided at two ends of the first end plate 30 along the third direction Z.

The number of receiving grooves 35 may be set according to the number of limiting portions 34.

The receiving groove 35 penetrates the first end plate 30 along the second direction X.

In the embodiments of this application, the strap 20 can be inserted into the receiving groove 35 and pass through a side of the limiting portion 34 facing away from the battery group 10, thereby restricting the limiting portion 34 from moving in a direction leaving the battery group 10, and enabling the strap 20 to constrain the multiple battery cells 11 of the battery group 10 through the first end plate 30. Providing the receiving groove 35 can also position the strap 20, simplifying the installation process of the strap 20.

In some embodiments, two ends of the first end plate 30 along the third direction Z are provided with multiple limiting portions 34. A receiving groove 35 is provided between two limiting portions 34 adjacent in the first direction Y.

In some embodiments, two straps 20 pass through the same receiving groove 35, and the two straps 20 respectively surround two battery groups 10. Within the same receiving groove 35, the two straps 20 are disposed along the third direction Z.

In the embodiments of this application, two straps 20 may pass through the same receiving groove 35, or three or more straps 20 may pass through the same receiving groove 35. For example, three straps 20 pass through the same receiving groove 35, two of which surround the same battery group 10, and the remaining one surrounds another battery group 10.

One receiving groove 35 can simultaneously position two straps 20, simplifying the structure of the first end plate 30. Disposing the two straps 20 along the third direction Z in the receiving groove 35 can allow the two straps 20 to share a portion of space in the first direction Y, thereby improving the space utilization rate of the battery 2 in the first direction Y and increasing the energy density of the battery 2.

In some embodiments, a sidewall of the receiving groove 35 is provided with a step surface 351. Within the same receiving groove 35, one strap 20 abuts against a bottom surface 352 of the receiving groove 35, and the other strap 20 abuts against the step surface 351.

In the third direction Z, the step surface 351 is spaced a certain distance from the bottom surface 352 of the receiving groove 35 in the third direction Z. For example, the step surface 351 may be formed on the limiting portion 34.

In the embodiments of this application, the step surface 351 and the bottom surface 352 can respectively position the two straps 20, reducing the risk of the two straps 20 overlapping in the first direction Y.

In some embodiments, within the same receiving groove 35, the two straps 20 are spaced apart along the third direction Z to reduce the risk of interference between the straps 20 due to assembly errors.

In some embodiments, in the third direction Z, a minimum distance D3 between the step surface 351 and the bottom surface 352 is greater than a maximum size D2 of the strap 20 along the third direction Z.

In some embodiments, the step surface 351 is perpendicular to the third direction Z.

In some embodiments, two sidewalls of the receiving groove 35 respectively form a second arc surface 353 and a third arc surface 354. The second arc surface 353 is connected to the bottom surface 352, located on a side of the bottom surface 352 facing towards the strap 20, and formed on one limiting portion 34. The third arc surface 354 is connected to the step surface 351, located on a side of the step surface 351 facing away from the bottom surface 352, and formed on another limiting portion 34.

The strap 20 abutting against the bottom surface 352 fits the second arc surface 353 and is bent into an arc shape. The strap 20 abutting against the step surface 351 fits the third arc surface 354 and is bent into an arc shape.

In some embodiments, the strap 20 includes a first edge 21 and a second edge 22 opposite along the third direction Z, the first edge 21 being closer to the bottom surface 352 of the receiving groove 35 in the third direction Z. A side of each limiting portion 34 facing away from the battery group 10 is provided with a stop protrusion 33. In the third direction Z, the stop protrusion 33 is disposed on a side of the second edge 22 facing away from the first edge 21.

One or more stop protrusion 33 may be provided on each limiting portion 34.

The stop protrusion 33 can limit the strap 20, reducing the risk of the strap 20 dislodging from the receiving groove 35 due to vibration of the battery 2 or other reasons, and improving the reliability of the battery 2.

In some embodiments, the number and position of the stop protrusions 33 may be set according to the number and position of the straps 20.

Each limiting portion 34 is provided with two stop protrusions 33, the two stop protrusions 33 being disposed along the first direction Y and respectively close to two ends of the limiting portion 34 along the first direction Y.

In some embodiments, the second end plate 40 is also provided with structures such as a limiting portion, a receiving groove, and a stop protrusion. For distinction, the limiting portion of the first end plate may be referred to as a first limiting portion, and the receiving groove of the first end plate may be referred to as a first receiving groove. The limiting portion of the second end plate may be referred to as a second limiting portion, and the receiving groove of the second end plate may be referred to as a second receiving groove.

For example, the first limiting portion and the second limiting portion are disposed that are opposite to each other along the second direction, and the first receiving groove and the second receiving groove are disposed that are opposite to each other along the second direction.

For example, the number of first limiting portions is equal to the number of second limiting portions, and the number of first receiving grooves is equal to the number of second receiving grooves.

In some embodiments, the second receiving groove is also provided with structures such as a step surface.

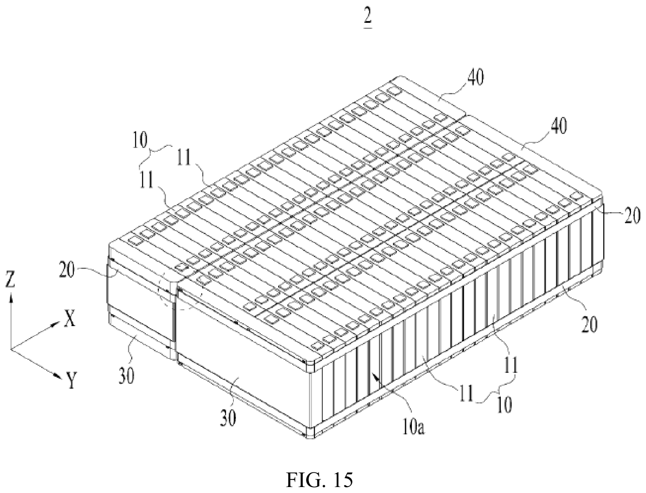

FIG. 15 is a schematic structural diagram of a battery according to some other embodiments of this application.

As shown in FIG. 15, in some embodiments, at least one strap 20 surrounds outer peripheries of two or more battery groups 10.

Provided that the strength of the strap 20 meets requirements, one strap 20 can simultaneously constrain two or more battery groups 10, thereby saving materials, reducing the space occupied by and the weight of the strap 20, and increasing the energy density of the battery.

In some embodiments, the multiple battery modules of the battery are divided into two types: one is first battery module, and the other is second battery module. In the first battery module, one strap 20 surrounds an outer periphery of one or more battery groups 10. In the second battery module, one strap 20 surrounds outer peripheries of two or more battery groups 10. The first battery module and the second battery module may be arranged along the first direction Y.

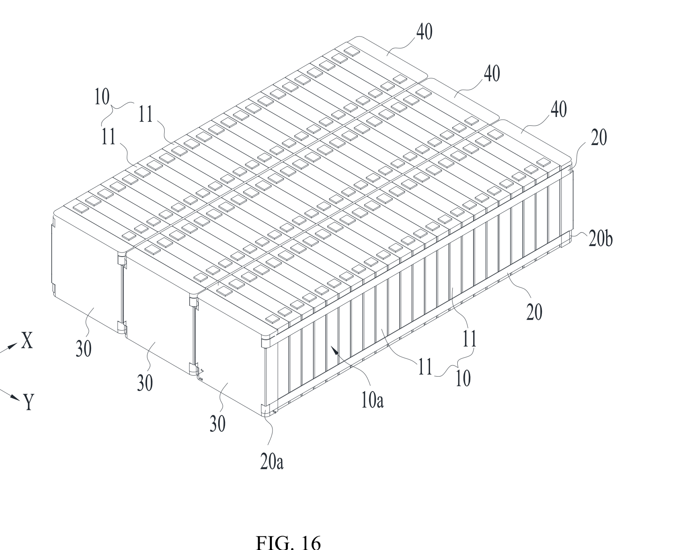

FIG. 16 is a schematic structural diagram of a battery according to some other embodiments of this application.

As shown in FIG. 16, in some embodiments, the strap 20 includes a first end portion 20a and a second end portion 20b that are opposite to each other along the second direction X, the first end portion 20a and the second end portion 20b being respectively connected to the first end plate 30 and the second end plate 40.

The first end portion 20a may be fixed to the first end plate 30 by welding, snap-fitting, fastening, or other manners, and the second end portion 20b may be fixed to the first end plate 30 by welding, snap-fitting, fastening, or other manners.

The embodiments of this application can save the space occupied by and the weight of the strap 20, increasing the energy density of the battery.

In some embodiments, the battery 2 includes multiple battery modules disposed along the first direction Y. Each battery module includes one first end plate 30, one second end plate 40, one battery group 10, and multiple straps 20. The battery group 10 is disposed between the first end plate 30 and the second end plate 40. Two sides of the battery group 10 along the first direction Y are provided with straps 20.

According to some embodiments of this application, this application further provides an electric device including the battery according to any one of the foregoing embodiments, the battery being configured to provide electrical energy to the electric device. The electric device may be any one of the foregoing devices or systems using a battery.

Referring to FIG. 3 to FIG. 7, an embodiment of this application provides a battery 2 including multiple battery modules 6 disposed along a first direction Y. Each battery module 6 includes a first end plate 30, a second end plate 40, a battery group 10, and two straps 20. The battery group 10 is disposed between the first end plate 30 and the second end plate 40 and includes multiple battery cells 11 stacked along a second direction X. The strap 20 surrounds an entirety formed by the first end plate 30, the second end plate 40, and the battery group 10, and constrains the multiple battery cells 11 of the battery group 10 through the first end plate 30 and the second end plate 40. The two straps 20 are spaced apart along a third direction Z. The first direction Y, the second direction X, and the third direction Z are pairwise perpendicular.

In any two adjacent battery modules 6, the straps 20 of the two battery modules 6 do not overlap in the first direction Y but overlap in the third direction Z.

The first end plate 30 is provided with four positioning surfaces 31, two positioning surfaces 31 being respectively located at two ends of the first end plate 30 along the first direction Y and configured to position one strap 20, and the other two positioning surfaces 31 being respectively located at two ends of the first end plate 30 along the first direction Y and configured to position another strap 20. The orientation of the two positioning surfaces 31 is opposite to the orientation of the other two positioning surfaces 31.

The strap 20 includes a first edge 21 and a second edge 22 opposite along the third direction Z, the first edge 21 abutting against the positioning surface 31. A side of the first end plate 30 facing away from the battery group 10 is provided with a stop protrusion 33. In the third direction Z, the stop protrusion 33 is disposed on a side of the second edge 22 facing away from the first edge 21.

Although this application has been described with reference to preferred embodiments, various improvements can be made thereto, and components therein can be replaced with equivalents without departing from the scope of this application. In particular, as long as there is no structural conflict, the technical features mentioned in various embodiments can be combined in any manner. This application is not limited to the specific embodiments disclosed in this specification but includes all technical solutions falling within the scope of the claims.

## Claims

1. A battery comprising:
multiple battery groups arranged along a first direction, wherein each battery group comprises multiple battery cells stacked along a second direction, the second direction intersecting the first direction; and
multiple straps, wherein at least a portion of the strap is disposed on a side surface of at least one battery group along the first direction and configured to constrain the multiple battery cells of at least one battery group ,
wherein at least two straps pass between adjacent battery groups and are configured to constrain the adjacent battery groups, the at least two straps not overlapping in the first direction but overlapping in a third direction, and the third direction being perpendicular to the first direction and the second direction.

2. The battery according to claim 1, wherein the strap is disposed around an outer periphery of at least one battery group .

3. The battery according to claim 2, wherein the strap is disposed around an outer periphery of one battery group and configured to constrain the multiple battery cells of the corresponding one battery group , and each battery group has at least one strap disposed around its outer periphery.

4. The battery according to claim 2, wherein at least one strap is disposed around outer peripheries of two or more battery groups.

5. The battery according to claim 1, further comprising a first end plate and a second end plate disposed that are opposite to each other along the second direction, wherein at least one battery group is disposed between the first end plate and the second end plate; and
the strap is connected to the first end plate and the second end plate, enabling the first end plate and the second end plate to clamp the at least one battery group from two sides.

6. The battery according to claim 5, wherein the strap comprises a first end portion and a second end portion that are opposite to each other along the second direction, the first end portion and the second end portion being respectively connected to the first end plate and the second end plate.

7. The battery according to claim 5, comprising multiple battery modules disposed along the first direction; wherein
each battery module comprises one first end plate, one second end plate, one battery group , and at least one strap , the battery group is disposed between the first end plate and the second end plate, and the strap surrounds an entirety formed by the first end plate, the second end plate, and the battery group ; and
straps of two adjacent battery modules do not overlap in the first direction but overlap in the third direction.

8. The battery according to claim 7, wherein an outer surface of the first end plate comprises a positioning surface perpendicular to the third direction, and the strap abuts against the positioning surface in the third direction.

9. The battery according to claim 8, wherein the strap comprises a first edge and a second edge opposite along the third direction, and the first edge abuts against the positioning surface; and
a side of the first end plate facing away from the battery group is provided with a stop protrusion; and in the third direction, the stop protrusion is disposed on a side of the second edge facing away from the first edge.

10. The battery according to claim 8 or 9, wherein
among two first end plates adjacent along the first direction, at least one positioning surface of one first end plate and at least one positioning surface of the other first end plate face towards a same direction, and a minimum distance between the positioning surfaces facing towards the same direction in the third direction is D 1; and
a maximum size of the strap along the third direction is D2, wherein D1 ≥ D2.

11. The battery according to claim 5, comprising at least one battery module; wherein
the battery module comprises one first end plate, one second end plate, at least two battery groups, and at least two straps, the at least two battery groups are disposed between the first end plate and the second end plate, and each strap passes around an outer side of the first end plate and an outer side of the second end plate and clamps multiple battery cells of one battery group through the first end plate and the second end plate.

12. The battery according to claim 11, wherein the first end plate comprises multiple limiting portions spaced apart along the first direction, a receiving groove is formed between adjacent limiting portions, and the receiving groove is recessed from an end surface of the first end plate along the third direction; and
the limiting portions are equal in number to the battery groups and correspond one-to-one thereto; and the strap passes through the receiving groove and surrounds the limiting portions and the battery groups corresponding to the limiting portions.

13. The battery according to claim 12, wherein two straps pass through a same receiving groove, and the two straps respectively surround two battery groups; and
within the same receiving groove, the two straps are arranged along the third direction.

14. The battery according to claim 13, wherein a sidewall of the receiving groove is provided with a step surface; and within the same receiving groove, one strap abuts against a bottom surface of the receiving groove, and the other strap abuts against the step surface.

15. The battery according to any one of claims 12 to 14, wherein,
the strap comprises a first edge and a second edge opposite along the third direction, the first edge being closer to a bottom surface of the receiving groove in the third direction; and
a side of each limiting portion facing away from the battery group is provided with a stop protrusion; and in the third direction, the stop protrusion is disposed on a side of the second edge facing away from the first edge.

16. An electric device comprising the battery according to any one of claims 1 to 15, wherein the battery is configured to provide electrical energy.
